# EUROPÄISCHE PATENTSCHRIFT

(11) **EP 3 543 096 B1**
(45) Veröffentlichungstag und Bekanntmachung des Hinweises auf die Patenterteilung: **26.10.2022**
(21) Anmeldenummer: 19160175.6
(22) Anmeldetag: 01.03.2019
(51) Int. Cl.: B62D 53/00, B62D 13/00, B66F 9/12, B66F 9/075, B66F 9/08, B66F 9/18, B66F 9/00, B66F 9/06

(54) **FLURFÖRDERZEUG MIT EINEM LASTRAHMEN FÜR FAHRBARE LASTTRÄGER**
INDUSTRIAL TRUCK WITH A LOAD FRAME FOR MOBILE LOAD CARRIER
CHARIOT DE MANUTENTION DOTÉ D'UN CADRE DE CHARGE POUR PORTE-CHARGE MOBILE

(30) Priorität: 19.03.2018 DE 102018106368
(43) Veröffentlichungstag der Anmeldung: 25.09.2019
(73) Patentinhaber: Linde Material Handling GmbH, 63743 Aschaffenburg (DE)
(72) Erfinder: Kistner, Andreas, 63607 Wächtersbach (DE); Knaut, Ralf Wolfgang, 41189 Mönchengladbach (DE)
(74) Vertreter: Patentship Patentanwaltgesellschaft

(56) Entgegenhaltungen:
- EP-A1- 0 303 413
- EP-A1- 3 251 921
- DE-A1-102010 043 207
- DE-A1-102015 104 975
- DE-A1-102016 103 720
- FR-A- 1 486 006

## Beschreibung

Die Erfindung betrifft ein Flurförderzeug mit einem ein Antriebsrad aufweisenden Antriebsteil und einem zwei Laufräder aufweisenden Lastteil, wobei das Flurförderzeug als dreirädriges Flurförderzeug für den Transport von mehreren Gebinden von Gütern, die auf fahrbaren Lastträgern angeordnet sind, ausgebildet ist.

In der Intralogistik, also dem Abwickeln logistischer Material- und Warenflüsse innerhalb eines Betriebsgeländes, kommen vermehrt so genannte Logistikzüge als effiziente Transportlösung zum Einsatz. Logistikzüge werden insbesondere für einen getakteten Materialfluss in Produktionsbetrieben genutzt. Übliche Logistikzüge bestehen aus einem Schleppfahrzeug und einem oder mehreren vom Schleppfahrzeug gezogenen Anhängern. Bei üblichen Logistikzügen ist an das Schleppfahrzeug mittels einer Deichsel ein Anhänger angehängt. Weitere Anhänger sind mittels jeweils einer Deichsel an den vorausfahrenden Anhänger angehängt. Mit Logistikzügen können mehrere Gebinde von Gütern gleichzeitig transportiert werden. Dabei stehen die Güter häufig auf Rollgestellen, die für die Aufnahme von standardisierten Warenträgern ausgelegt sind. Die Rollgestelle können auch einen regalartigen Aufbau zum Aufnehmen mehrerer kleiner Warenträger oder Teile besitzen.

Die DE 10 2013 043 207 A1 offenbart einen Logistikzug, der aus einem Schleppfahrzeug und einem oder mehreren an dem Schleppfahrzeug angehängten Anhängern besteht.

Zum Be- und Entladen der Logistikzüge werden die zu transportierenden Güter mit oder ohne Rollgestelle manuell oder automatisiert in eine Position gebracht, um die zu transportierenden Güter mit dem Logistikzug zu einem Zielort zu verbringen. Häufig werden die Güter mit den Rollgestellen in Aufnahmeeinrichtungen der Anhänger eingeschoben. Die Aufnahmeeinrichtungen können als Lastrahmen ausgebildet sein, die die Rollgestelle seitlich umfassen. Zum Transport können die Rollgestelle mittels Hubeinrichtungen angehoben werden, so dass sie keinen Bodenkontakt mehr haben.

Allgemein ausgedrückt sind also Logistikzüge hintereinander angeordnete Aufnahmepositionen für mehrere Warenträger, Rollgestelle oder Teile, die so verbunden sind, dass diese im Verband in kontrollierter Weise gleichzeitig bewegt werden können.

Ein so gegliederter Logistikzug, bei dem ein Schleppfahrzeug einen oder mehrere Anhänger zieht, hat durch den länglichen Aufbau und dem damit verbundenen Fahrverhalten Einschränkungen in der Erreichbarkeit von Anlieferpunkten in Sackgassen, auf engen Fahrwegen und an stark frequentierten Verkehrs- und Knotenpunkten. Das Rangieren von Logistikzügen, bei denen ein Schleppfahrzeug einen oder mehrere Anhänger zieht, ist nur in engen Grenzen möglich. Es bleiben Anlieferpositionen nicht oder nur unter ungünstigen Bedingungen erreichbar. Ungünstig sind unter anderem längere Laufwege, Behinderung anderer Fahrzeuge/Verkehrsteilnehmer, Blockieren anderer Anlieferstellen durch die Länge des Logistikzuges oder die Generierung potentieller Gefahrensituationen wie z.B. ungünstige Parkpositionen.

Aus der FR 1 486 006 A ist ein gattungsgemäßes Flurförderzeug bekannt, bei dem ein Antriebsteil mit einem Fahrerarbeitsplatz um eine Hochachse an einem bügelförmigen Lastteil drehbar angeordnet ist, um mit dem Fahrergewicht ein Gegengewicht bilden zu können. Eine Lastgabel ist an einem Hubmast des Lastteils in vertikaler Richtung anhebbar und absenkbar angeordnet.

Die EP 0 303 413 A1 offenbart einen knickgelenkten Schmalgangstapler mit einem Antriebsteil, der zwei Antriebsräder aufweist, und einem Lastteil, das einen Hubmast und zwei Lastrollen aufweist. An dem Hubmast ist ein Hubschlitten mit einer Lastgabel in vertikaler Richtung anhebbar und absenkbar angeordnet. Zwischen Hubschlitten und Lastgabel ist weiterhin ein Scherenmechanismus vorgesehen, mit dem die Lastgabel an dem Hubmast in horizontaler Richtung verstellbar ist.

Der vorliegenden Erfindung liegt die Aufgabe zugrunde, ein Flurförderzeug der eingangs genannten Art so auszugestalten, dass es die Funktionen eines Logistikzuges ermöglicht, ohne die Nachteile der eingeschränkten Manövrierfähigkeit aufzuweisen.

Diese Aufgabe wird erfindungsgemäß dadurch gelöst, dass der Lastteil mindestens einen Lastrahmen umfasst, in den der mindestens eine fahrbarere Lastträger zu dessen Aufnahme und Transport in horizontaler Richtung von einer oder beiden Fahrzeugseiten aus eingeschoben werden kann, wobei der Lastrahmen mittels einer Hubeinrichtung anhebbar ist zum Anheben des eingeschobenen Lastträgers in eine Transportstellung, wobei die fahrbaren Lastträger in der Transportstellung mit ihren Rollen vom Boden abgehoben sind, so dass die Rollen des Lastträgers während des Transports im Flurförderzeug keinen Bodenkontakt haben, wobei zum Ausladen der Lastträger mittels der Hubeinrichtung absenkbar ist und die Lastträger auf den eigenen Rollen aus dem Lastrahmen herausfahrbar sind.

Durch die Zusammenfassung eines Antriebsteils und eines Lastteils mit einem Lastrahmen, in den mindestens ein fahrbarer Lastträger horizontal eingeschoben werden kann, auf einem Flurförderzeug können fahrbare Lastträger wie bei einem herkömmlichen Logistikzug bequem aufgenommen und transportiert werden, ohne Einschränkungen bei der Manövrierfähigkeit hinnehmen zu müssen. Da der Lastrahmen auf dem Flurförderzeug integriert ist, wird beispielsweise das Rangieren im Vergleich zu bekannten Logistikzügen erheblich erleichtert.

Diese Integration des Lastrahmens, in den mindestens ein fahrbarer Lastträger horizontal eingeschoben werden kann, auf dem Flurförderzeug kann auf technisch einfache Weise dadurch realisiert werden, dass das Flurförderzeug aus Teilen eines Logistikzuges zusammengesetzt ist, wobei der Antriebsteil des Flurförderzeugs aus dem Antriebsteil eines Schleppfahrzeugs und der Lastteil des Flurförderzeugs aus Teilen eines Anhängers gebildet sind, wobei ein vorderer radloser Teil des Anhängers starr oder anhebbar mit dem Antriebsteil des Schleppfahrzeugs verbunden ist und an einem hinteren Teil des Anhängers die Laufräder angeordnet sind. Man kann sich das anschaulich so vorstellen, dass an einem Schleppfahrzeug die Hinterräder demontiert sind, so dass es nur noch über mindestens ein Antriebsrad verfügt, und der vordere Teil des Anhängers mit demontierter Deichsel und demontierten Vorderrädern starr am hinteren Teil des Schleppfahrzeugs befestigt ist.

Bei dem erfindungsgemäßen Flurflörderzeug hat also der Schlepperteil bzw. der Antriebsteil noch mindestens ein angetriebenes und bevorzugt gelenktes Rad, der Anhängerteil bzw. der Lastteil hat zwei hintere Laufräder. Dies bildet zusammen ein mindestens dreirädriges Flurförderzeug für den Transport von mehreren Gebinden von Gütern, die auf fahrbaren Ladeträgern in den Lastrahmen geschoben werden können.

Um einen möglichst lastschonenden, geräusch- und verschleißarmen Transport der Güter zu ermöglichen, ist der Lastrahmen mittels einer Hubeinrichtung anhebbar zum Anheben des eingeschobenen Lastträgers in eine Transportstellung. Somit können die fahrbaren Lastträger in der Transportstellung mit ihren Rollen vom Boden abgehoben werden, so dass sie während des Transports im Flurförderzeug keinen Bodenkontakt haben. Zum Ausladen kann der Lastträger mittels der Hubeinrichtung wieder abgesenkt werden und die Lastträger auf den eigenen Rollen einfach aus dem Lastrahmen herausgefahren werden.

Der Lastrahmen weist bevorzugt horizontal ausgerichtete Führungs- und Tragelemente für den Lastträger auf. Diese Führungs- und Tragelemente umfassen den fahrbaren Lastträger beim Einschieben von zwei Seiten und geben ihm einen sicheren Halt im Lastrahmen.

Mit Vorteil sind die Führungs- und Tragelemente quer zur Längsrichtung des Flurförderzeugs ausgerichtet. Somit können die fahrbaren Lastträger von einer Fahrzeugseite oder beiden Fahrzeugseiten in den Lastrahmen geschoben werden. Dies erleichtert das Verladen der Güter beispielsweise in Regalgassen.

Die Führungs- und Tragelemente sind zweckmäßigerweise als Tragbleche oder Rollenbahnelemente ausgebildet. Mit Tragblechen können eingeschobene fahrbare Lastträger auf einfache Weise im Lastrahmen mitgeführt werden. Rollenbahnelemente ermöglichen reibungsarmes und somit müheloses Einschieben und Ausschieben der Lastträger in den Lastrahmen.

In einer besonders bevorzugten Ausgestaltung der Erfindung ist der Lastrahmen als Brückenrahmen mit beidseitiger Zugänglichkeit ausgebildet. Dabei besteht der Lastteil in einer stark reduzierten Ausführung nur noch aus einem vorderen Teil mit Führungs- und Tragelementen und einem hinteren Teil mit Führungs- und Tragelementen, wobei die beiden Teile über den Brückenrahmen, der sich über den Zwischenraum spannt, verbunden sind. Auf diese Weise wird ein von beiden Seiten frei zugänglicher Zwischenraum geschaffen, in den die Lastträger ungehindert eingeschoben und ausgeschoben werden können.

Eine weitere Ausführungsform sieht vor, dass der Lastrahmen einen in Längsrichtung des Flurförderzeugs verstellbaren Mittelträger für Lastträger mit unterschiedlichen Abmessungen aufweist. Dadurch kann der Lastrahmen flexibel an verschiedene Anforderungen der zu transportierenden Güter angepasst werden.

Die Hubeinrichtung kann beispielsweise derart ausgeführt sein, dass der Lastrahmen mit den Führungs- und Tragelementen relativ zu dem Antriebsrad bzw. dem Antriebsteil sowie den Laufrädern angehoben und abgesenkt werden kann. Der Lastrahmen ist hierzu bevorzugt anhebbar und absenkbar am Antriebsteil angeordnet. Alternativ kann die Hubeinrichtung derart ausgeführt sein, dass die Führungs- und Tragelemente relativ zum Lastrahmen angehoben und abgesenkt werden können. Der Lastrahmen ist hierzu bevorzugt starr am Antriebsteil angeordnet.

Zweckmäßigerweise ist der Lastrahmen für einen mit einem Rollgestell ausgestatteten Lastträger ausgebildet. Solche Rollgestelle sind beispielsweise als Palettenfahrgestelle bekannt, auf denen Paletten aufgelegt sind. Dabei können die Rollgestelle mit leicht laufenden Nachlaufrollen ausgestattet sein, so dass sie am Bestimmungsort leicht aus dem Lastrahmen des Flurförderzeugs herausgerollt und zur gewünschten Position beispielsweise an einem Produktionsband verschoben werden können.

In einer technisch einfachen und kostengünstigen Ausführungsform weist der Lastteil feststehende Laufräder auf und ist das mindestens eine Antriebsrad lenkbar.

Eine bevorzugte Ausgestaltung sieht vor, dass der Lastteil lenkbare Laufräder aufweist und das mindestens eine Antriebsrad lenkbar oder nicht lenkbar ist. Dadurch ist bei Lenkbarkeit des Antriebsrades eine Allradlenkung erzielbar, mit der die Manövrierfähigkeit des Flurförderzeugs, insbesondere in engen Regalgassen, weiter verbessert wird.

Dabei ist es besonders vorteilhaft, dass die lenkbaren Laufräder mit dem lenkbaren Antriebsrad derart in Wirkverbindung stehen, dass sie eine zur Lenkbewegung des Antriebsrads entgegengesetzte Lenkbewegung ausführen. Bevorzugt werden die lenkbaren Laufräder in die entgegengesetzte Richtung zum Antriebsrad derart gedreht, dass alle Räder auf einer gemeinsamen Kreisbahn liegen. Auf diese Weise kann das Flurförderzeug mühelos auch um enge Kurven bewegt werden und es ergibt sich eine hohe Spurtreue.

In einer Weiterbildung des Erfindungsgedankens sind die lenkbaren Laufräder und das lenkbare Antriebsrad quer zur Längsrichtung des Flurförderzeugs ausrichtbar, so dass die Laufräder und das Antriebsrad eine Fahrbewegung des Flurförderzeugs quer zur Längsrichtung des Flurförderzeugs ermöglichen. Diese Variante der Allradlenkung erlaubt ein vereinfachtes und kontrolliertes Fahren auch auf engen Fahrwegen sowie ein seitliches Heranfahren an Regalgassen oder Produktionsbänder.

Um mit dem erfindungsgemäßen Flurförderzeug auch einen Logistikzug mit mehreren Anhängern bilden zu können, ist in einer weiteren bevorzugten Ausgestaltung der Erfindung vorgesehen, dass am Lastteil des Flurförderzeugs eine Anhängerkupplung angeordnet ist.

Die Erfindung bietet eine ganze Reihe von Vorteilen:
Da mit dem Flurförderzeug aufgrund der besseren Manövrierfähigkeit im Vergleich zu herkömmlichen Logistikzügen Zielorte näher angefahren werden können, verkürzen sich erforderliche Laufwege und es ergibt sich eine Zeitersparnis. Außerdem wird die Sicherheit im Fahrbetrieb erhöht. Durch den Wegfall einer Deichsel zum Schleppfahrzeug reduziert sich bei dem erfindungsgemäßen Flurförderzeug gegenüber herkömmlichen Logistikzügen die Zuglänge. Durch den Entfall einer Deichsel zum Schleppfahrzeug sowie der Vorderachse mit den Vorderrädern eines Anhängers gegenüber einem Logistikzug des Standes der Technik ergeben sich bei dem erfindungsgemäßen Flurförderzeug günstigere Herstellkosten. Dadurch verringert sich insgesamt auch der Platzbedarf. Aufgrund der kürzeren Bauform und der Möglichkeit, rückwärts zu fahren sowie quer zur Längsachse des Fahrzeugs zu fahren, wird die Wendigkeit erheblich erhöht.

Weitere Vorteile und Einzelheiten der Erfindung werden anhand der in den schematischen Figuren dargestellten Ausführungsbeispiele näher erläutert. Hierbei zeigen
- Figur 1: eine Seitenansicht eines erfindungsgemäßen Flurförderzeugs mit zwei starren Laufrädern am Lastteil,
- Figur 2: eine Seitenansicht eines erfindungsgemäßen Flurförderzeugs mit zwei lenkbaren Laufrädern am Lastteil,
- Figur 3: eine Seitenansicht eines erfindungsgemäßen Flurförderzeugs mit zusätzlichem Anhänger und
- Figur 4: eine perspektivische Darstellung eines erfindungsgemäßen Flurförderzeugs mit quer zur Fahrzeuglängsrichtung ausgerichteten Rädern.

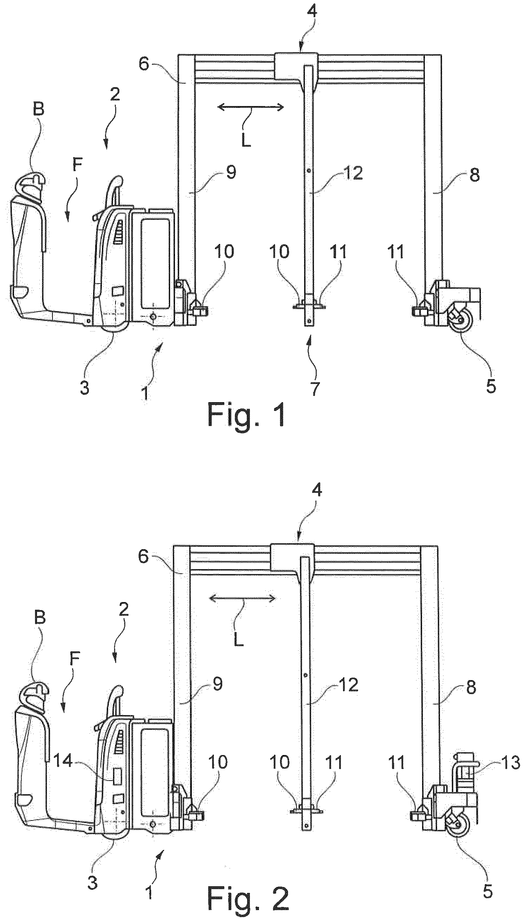

In der Figur 1 ist ein erfindungsgemäßes Flurförderzeug 1 mit dem Antriebsteil 2 und dem Lastteil 4 dargestellt. Der Antriebsteil 2 weist im dargestellten Ausführungsbeispiel ein lenkbares Antriebsrad 3 auf, während die beiden Laufräder 5 des Lastteils 4 starr sind. Der Antriebsteil 2 weist einen Fahrerarbeitsplatz F mit Bedienelementen B auf, mit denen der Fahrantrieb und die Lenkung gesteuert werden können.

Der Antriebsteil 2 des erfindungsgemäßen Flurförderzeugs 1 entspricht weitgehend dem Antriebsteil eines Schleppfahrzeugs, wobei aber die bei einem herkömmlichen Schleppfahrzeug vorhandenen Hinterräder fehlen. Diese Funktion wird von den Laufrädern 5 des Lastteils 4 übernommen.

Der Lastteil 4 des erfindungsgemäßen Flurförderzeugs 1 entspricht weitgehend einem üblichen Anhänger eines Logistikzuges, wobei aber die Vorderräder und die Deichsel fehlen.

Der vordere Teil des Lastteils 4 ist starr oder anhebbar an dem Antriebsteil 2 befestigt.

Es ergibt sich so ein dreirädriges Flurförderzeug für den Transport von mehreren Gebinden von Gütern, die auf fahrbaren Lastträgern in einen Lastrahmen 6 des Lastteils 4 in horizontaler Richtung von einer oder beiden Fahrzeugseiten aus geschoben werden können.

Der Lastrahmen 6 ist als Brückenrahmen ausgebildet, der den Zwischenraum 7 zwischen dem vorderen Teil 9 und dem hinteren Teil 8 des Lastrahmens 6 überspannt.

Der vordere Teil 9 und der hintere Teil 8 des Lastrahmens 6 weisen als Tragbleche oder Rollenbahnelemente ausgebildete Führungs- und Tragelemente 10 und 11 auf, die den in der Figur 1 nicht dargestellten Lastträger beim Einschieben in den Lastteil 4 seitlich umfassen und ihm einen sicheren Halt im Lastrahmen 6 geben. Der Zwischenraum 7 ist ungehindert von beiden Seiten des Flurförderzeugs 1 zugänglich.

Im dargestellten Ausführungsbeispiel umfasst der als Brückenrahmen ausgebildete Lastrahmen 6 einen in Längsrichtung L des Flurförderzeugs 1 verstellbaren Mittelträger 12. Der verstellbaren Mittelträger 12 ist ebenfalls mit Führungs- und Tragelemente 10 und 11 versehen und ermöglicht eine Anpassung an Lastträger mit unterschiedlichen Abmessungen.

Über eine nicht näher dargestellte Hubeinrichtung können die in den Lastrahmen 6 eingeschobenen Lastträger für den Transport in dem Flurförderzeug 1 in eine Transportstellung angehoben werden. Die Hubeinrichtung kann beispielsweise derart ausgeführt sein, dass der Lastrahmen 6 mit den Führungs- und Tragelementen 10, 11 relativ zu dem Antriebsrad 3 bzw. dem Antriebsteil 2 sowie den Laufrädern 5 angehoben und abgesenkt werden kann. Hierzu ist bevorzugt mittels der Hubeinrichtung der vordere Teil 9 des Lastrahmens 6 relativ zu dem Antriebsteil 2 bzw. dem Antriebsrad 3 anhebbar und absenkbar und der hintere Teil 8 des Lastrahmens 6 relativ zu den Laufrädern 5 anhebbar und absenkbar.

Die Figur 2 zeigt eine Variante des Flurförderzeugs 1 aus Figur 1, bei der die Laufräder 5 des Lastteils 4 lenkbar, insbesondere elektrisch lenkbar, ausgeführt sind. Hierzu ist ein elektrischer Lenkmotor 13 vorgesehen. Das Antriebsrad 3 kann als nicht-lenkbares Antriebsrad 3 oder als ebenfalls lenkbares Antriebsrad 3 ausgebildet sein. Im Falle einer Ausführung des Antriebsrades 3 als lenkbaren Antriebsrades 3 wird der Lenkmotor 13 über eine Fahrzeugsteuerung 14 so gesteuert wird, dass er Lenkbewegungen ausführt, die entgegengesetzt zu den Lenkbewegungen des Antriebsrads 3 sind. Diese Allrad- Lenkung erlaubt ein vereinfachtes und kontrolliertes Fahren auch auf engen Fahrwegen.

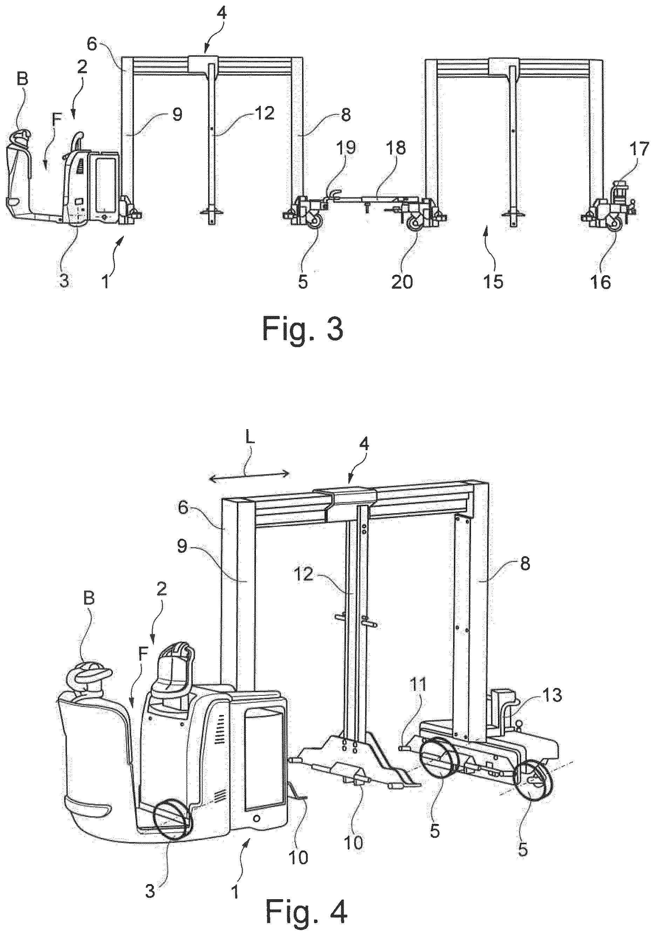

In der Figur 3 ist ein erfindungsgemäßes Flurförderzeug 1 mit zusätzlich angehängtem Anhänger 15 dargestellt. Der Anhänger 15 weist Vorderräder 20 und Hinterräder 16 auf. Der Anhänger 15 weist im dargestellten Ausführungsbeispiel gelenkte Hinterräder 16 auf, die trotz der Länge des Logistikzuges eine hohe Manövrierfähigkeit erlauben. Die Hinterräder 16 können mittels eines elektrischen Lenkmotors 17 gelenkt werden. Der Anhänger 15 ist über eine Deichsel 18 an eine Anhängerkupplung 19 des Flurförderzeugs 1 befestigt. Die Vorderräder 20 sind ebenfalls lenkbar und zur Lenkung mit der Anhängerdeichsel 18 gekoppelt. Das Flurförderzeug 1 kann am Lastteil 4 mit starren Laufrädern 5 gemäß der Figur 1 oder gelenkten Laufrädern 5 gemäß der Figur 2 versehen sein. Die gelenkten Hinterräder 16 können derart angesteuert werden, dass die Hinterräder 16 zu den Lenkbewegungen der Vorderräder 20 entgegengesetzte Lenkbewegungen ausführen.

Die Figur 4 zeigt eine Besonderheit des Flurförderzeugs 1 aus Figur 2 mit lenkbaren Laufrädern 5 und lenkbarem Antriebsrad 3. In dieser Variante können sowohl das Antriebsrad 3 als auch die Laufräder 5 quer zur Längsrichtung L des Flurförderzeugs 1 ausgerichtet werden, so dass das Flurförderzeug 1 quer zur Längsrichtung L fahren kann. Diese Variante ermöglicht auch ein seitliches Heranfahren an Regalgassen oder Produktionsbänder.

## Patentansprüche

1. Flurförderzeug (1) mit einem ein Antriebsrad (3) aufweisenden Antriebsteil (2) und einem zwei Laufräder (5) aufweisenden Lastteil (4), wobei das Flurförderzeug (1) als dreirädriges Flurförderzeug (1) für den Transport von mehreren Gebinden von Gütern, die auf fahrbaren Lastträgern angeordnet sind, ausgebildet ist, **dadurch gekennzeichnet, dass** der Lastteil (4) mindestens einen Lastrahmen (6) umfasst, in den der mindestens eine fahrbarere Lastträger zu dessen Aufnahme und Transport in horizontaler Richtung von einer oder beiden Fahrzeugseiten aus eingeschoben werden kann, wobei der Lastrahmen (6) mittels einer Hubeinrichtung anhebbar ist zum Anheben des eingeschobenen Lastträgers in eine Transportstellung, wobei die fahrbaren Lastträger in der Transportstellung mit ihren Rollen vom Boden abgehoben sind, so dass die Rollen des Lastträgers während des Transports im Flurförderzeug keinen Bodenkontakt haben, wobei zum Ausladen der Lastträger mittels der Hubeinrichtung absenkbar ist und die Lastträger auf den eigenen Rollen aus dem Lastrahmen herausfahrbar sind.

2. Flurförderzeug nach Anspruch 1, **dadurch gekennzeichnet, dass** der Lastrahmen (6) horizontal ausgerichtete Führungs- und Tragelemente (10, 11) für den Lastträger aufweist.

3. Flurförderzeug nach Anspruch 2, **dadurch gekennzeichnet, dass** die Führungs- und Tragelemente (10, 11) quer zur Längsrichtung des Flurförderzeugs (1) ausgerichtet sind.

4. Flurförderzeug nach Anspruch 2 oder 3, **dadurch gekennzeichnet, dass** die Führungs- und Tragelemente (10, 11) als Tragbleche oder Rollenbahnelemente ausgebildet sind.

5. Flurförderzeug nach einem der Ansprüche 1 bis 4, **dadurch gekennzeichnet, dass** der Lastrahmen (6) als Brückenrahmen mit beidseitiger Zugänglichkeit ausgebildet ist.

6. Flurförderzeug nach einem der Ansprüche 1 bis 5, **dadurch gekennzeichnet, dass** der Lastrahmen (6) einen in Längsrichtung (L) des Flurförderzeugs (1) verstellbaren Mittelträger (12) für Lastträger mit unterschiedlichen Abmessungen aufweist.

7. Flurförderzeug nach einem der Ansprüche 1 bis 6, **dadurch gekennzeichnet, dass** der Lastrahmen (6) für einen mit einem Rollgestell ausgestatteten Lastträger ausgebildet ist.

8. Flurförderzeug nach einem der Ansprüche 1 bis 7, **dadurch gekennzeichnet, dass** der Lastteil (4) feststehende Laufräder (5) aufweist und das mindestens eine Antriebsrad (3) lenkbar ist.

9. Flurförderzeug nach einem der Ansprüche 1 bis 7, **dadurch gekennzeichnet, dass** der Lastteil (4) lenkbare Laufräder (5) aufweist und das mindestens eine Antriebsrad (3) lenkbar oder nicht lenkbar ist.

10. Flurförderzeug nach Anspruch 9, **dadurch gekennzeichnet, dass** die lenkbaren Laufräder (5) mit dem lenkbaren Antriebsrad (3) derart in Wirkverbindung stehen, dass sie eine zur Lenkbewegung des Antriebsrads (3) entgegengesetzte Lenkbewegung ausführen.

11. Flurförderzeug nach Anspruch 9, **dadurch gekennzeichnet, dass** die lenkbaren Laufräder (5) und das lenkbare Antriebsrad (3) quer zur Längsrichtung (L) des Flurförderzeugs (1) ausrichtbar sind und eine Fahrbewegung des Flurförderzeugs (1) quer zur Längsrichtung (L) des Flurförderzeugs (1) ermöglichen.

12. Flurförderzeug nach einem der Ansprüche 1 bis 11, **dadurch gekennzeichnet, dass** am Lastteil (4) eine Anhängerkupplung (19) angeordnet ist.

13. Flurförderzeug nach einem der Ansprüche 1 bis 12, **dadurch gekennzeichnet, dass** das Flurförderzeug (1) aus Teilen eines Logistikzuges zusammengesetzt ist, wobei der Antriebsteil (2) des Flurförderzeugs (1) aus dem Antriebsteil (2) eines Schleppfahrzeugs und der Lastteil (4) des Flurförderzeugs (1) aus Teilen eines Anhängers gebildet sind, wobei ein vorderer radloser Teil des Anhängers starr oder anhebbar mit dem Antriebsteil (2) des Schleppfahrzeugs verbunden ist und am hinteren Teil des Anhängers die Laufräder (5) angeordnet sind.

## Claims

1. Industrial truck (1) having a drive part (2), which has a drive wheel (3), and having a load part (4) which has two running wheels (5), wherein the industrial truck (1) is configured as a three-wheeled industrial truck (1) for the transport of a plurality of containers of goods which are arranged on mobile load carriers, **characterized in that** the load part (4) comprises at least one load frame (6) into which the at least one mobile load carrier can, for the reception and transport thereof, be inserted in the horizontal direction from one or both vehicle sides, wherein the load frame (6) is able to be lifted by means of a lifting device for lifting the inserted load carrier into a transport position, wherein, in the transport position, the mobile load carriers have their rollers lifted off the floor such that the rollers of the load carrier have no floor contact during transport in the industrial truck, wherein, for unloading, the load carrier can be lowered by means of the lifting device and the load carriers can be moved out of the load frame on their own rollers.

2. Industrial truck according to Claim 1, **characterized in that** the load frame (6) has horizontally oriented guide and support elements (10, 11) for the load carrier.

3. Industrial truck according to Claim 2, **characterized in that** the guide and support elements (10, 11) are oriented transversely to the longitudinal direction of the industrial truck (1).

4. Industrial truck according to Claim 2 or 3, **characterized in that** the guide and support elements (10, 11) are configured as support plates or roller track elements.

5. Industrial truck according to one of Claims 1 to 4, **characterized in that** the load frame (6) is configured as a bridge frame with accessibility on both sides.

6. Industrial truck according to one of Claims 1 to 5, **characterized in that** the load frame (6) has a central support (12), which is adjustable in the longitudinal direction (L) of the industrial truck (1), for load carriers having different dimensions.

7. Industrial truck according to one of Claims 1 to 6, **characterized in that** the load frame (6) is configured for a load carrier equipped with a rolling framework.

8. Industrial truck according to one of Claims 1 to 7, **characterized in that** the load part (4) has fixed running wheels (5), and the at least one drive wheel (3) is steerable.

9. Industrial truck according to one of Claims 1 to 7, **characterized in that** the load part (4) has steerable running wheels (5), and the at least one drive wheel (3) is steerable or non-steerable.

10. Industrial truck according to Claim 9, **characterized in that** the steerable running wheels (5) are operatively connected to the steerable drive wheel (3) in such a way that they perform a steering movement opposite to the steering movement of the drive wheel (3).

11. Industrial truck according to Claim 9, **characterized in that** the steerable running wheels (5) and the steerable drive wheel (3) can be oriented transversely to the longitudinal direction (L) of the industrial truck (1) and allow a travelling movement of the industrial truck (1) transversely to the longitudinal direction (L) of the industrial truck (1).

12. Industrial truck according to one of Claims 1 to 11, **characterized in that** a trailer coupling (19) is arranged on the load part (4).

13. Industrial truck according to one of Claims 1 to 12, **characterized in that** the industrial truck (1) is composed of parts of a logistics train, wherein the drive part (2) of the industrial truck (1) is formed from the drive part (2) of a tractor vehicle, and the load part (4) of the industrial truck (1) is formed from parts of a trailer, wherein a front wheelless part of the trailer is rigidly or liftably connected to the drive part (2) of the tractor vehicle, and the running wheels (5) are arranged on the rear part of the trailer.

## Revendications

1. Chariot de manutention (1) comprenant une partie d'entraînement (2) présentant une roue motrice (3) et une partie de charge (4) présentant deux roues de roulement (5), le chariot de manutention (1) étant configuré sous forme de chariot de manutention (1) à trois roues pour le transport de plusieurs emballages de marchandises, qui sont agencés sur des supports de charge mobiles, **caractérisé en ce que** la partie de charge (4) comprend au moins un cadre de charge (6) dans lequel l'au moins un support de charge mobile peut être inséré pour sa réception et son transport dans la direction horizontale à partir d'un ou des deux côtés du véhicule, le cadre de charge (6) pouvant être soulevé au moyen d'un dispositif de levage pour soulever le support de charge inséré dans une position de transport, les supports de charge mobiles étant soulevés du sol avec leurs roulettes dans la position de transport, de telle sorte que les roulettes du support de charge ne sont pas en contact avec le sol pendant le transport dans le chariot de manutention, le support de charge pouvant être abaissé au moyen du dispositif de levage pour le déchargement et les supports de charge pouvant être sortis du cadre de charge sur leurs propres roulettes.

2. Chariot de manutention selon la revendication 1, **caractérisé en ce que** le cadre de charge (6) présente des éléments de guidage et de support (10, 11) orientés horizontalement pour le support de charge.

3. Chariot de manutention selon la revendication 2, **caractérisé en ce que** les éléments de guidage et de support (10, 11) sont orientés transversalement à la direction longitudinale du chariot de manutention (1).

4. Chariot de manutention selon la revendication 2 ou 3, **caractérisé en ce que** les éléments de guidage et de support (10, 11) sont configurés sous forme de tôles de support ou d'éléments de convoyeur à rouleaux.

5. Chariot de manutention selon l'une quelconque des revendications 1 à 4, **caractérisé en ce que** le cadre de charge (6) est configuré sous forme de cadre en pont avec accès des deux côtés.

6. Chariot de manutention selon l'une quelconque des revendications 1 à 5, **caractérisé en ce que** le cadre de charge (6) présente un support central (12) réglable dans la direction longitudinale (L) du chariot de manutention (1) pour des supports de charge de dimensions différentes.

7. Chariot de manutention selon l'une quelconque des revendications 1 à 6, **caractérisé en ce que** le cadre de charge (6) est configuré pour un support de charge équipé d'un châssis roulant.

8. Chariot de manutention selon l'une quelconque des revendications 1 à 7, **caractérisé en ce que** la partie de charge (4) présente des roues de roulement fixes (5) et l'au moins une roue motrice (3) est dirigeable.

9. Chariot de manutention selon l'une quelconque des revendications 1 à 7, **caractérisé en ce que** la partie de charge (4) présente des roues de roulement dirigeables (5) et l'au moins une roue motrice (3) est dirigeable ou non dirigeable.

10. Chariot de manutention selon la revendication 9, **caractérisé en ce que** les roues de roulement dirigeables (5) sont en liaison active avec la roue motrice dirigeable (3) de telle sorte qu'elles effectuent un mouvement de direction opposé au mouvement de direction de la roue motrice (3).

11. Chariot de manutention selon la revendication 9, **caractérisé en ce que** les roues de roulement dirigeables (5) et la roue motrice dirigeable (3) peuvent être orientées transversalement à la direction longitudinale (L) du chariot de manutention (1) et permettent un mouvement de déplacement du chariot de manutention (1) transversalement à la direction longitudinale (L) du chariot de manutention (1).

12. Chariot de manutention selon l'une quelconque des revendications 1 à 11, **caractérisé en ce qu'**un accouplement de remorque (19) est agencé sur la partie de charge (4).

13. Chariot de manutention selon l'une quelconque des revendications 1 à 12, **caractérisé en ce que** le chariot de manutention (1) est composé de parties d'un train logistique, la partie d'entraînement (2) du chariot de manutention (1) étant formée de la partie d'entraînement (2) d'un véhicule de remorquage et la partie de charge (4) du chariot de manutention (1) étant formée de parties d'une remorque, une partie avant sans roue de la remorque étant reliée de manière rigide ou soulevable à la partie d'entraînement (2) du véhicule de remorquage et les roues de roulement (5) étant agencées sur la partie arrière de la remorque.
